Europäisches Patentamt

(19) European Patent Office

Office européen des brevets

(11) Publication number: **0 063 958**
**B1**

(12) **EUROPEAN PATENT SPECIFICATION**

(45) Date of publication of patent specification: **15.07.87**

(21) Application number: **82302166.2**

(22) Date of filing: **27.04.82**

(51) Int. Cl.⁴: **G 01 G 3/14, G 01 L 1/22**

(54) **Weighing apparatus.**

(30) Priority: **28.04.81 JP 62474/81**

(43) Date of publication of application:
**03.11.82 Bulletin 82/44**

(45) Publication of the grant of the patent:
**15.07.87 Bulletin 87/29**

(84) Designated Contracting States:
**DE FR GB IT**

(56) References cited:
**EP-A-0 035 579**
**FR-A-2 177 952**
**US-A-3 905 433**
**US-A-3 963 082**

**PATENTS ABSTRACTS OF JAPAN, volume 3,
no. 143, November 27, 1979, page 47E154 & JP
- A - 54 - 121 169 (MATSUSHITA DENKI
SANGYO K.K.) 20-09-1979**

(73) Proprietor: **KABUSHIKI KAISHA ISHIDA KOKI
SEISAKUSHO
44, Shogoin Sannou-cho Sakyo-ku
Kyoto-shi Kyoto 606 (JP)**

(72) Inventor: **Sashiki, Takashi
10-46, Babamibashiri
Nagaokakyo-shi Kyoto (JP)**
Inventor: **Matsuno, Masaaki
Dai-roku, Misuzu-Sou 1 28-1, Kitakasanroku
Tanda-cho Yamashina-ku Kyoto-shi Kyoto (JP)**
Inventor: **Kobayashi, Noboru
326-80, Bodaiji Kousei-cho
Kouga-gun Shiga (JP)**
Inventor: **Mikami, Yoshiharu
126-12, Shimogamo Miyazaki-cho Sakyo-ku
Kyoto-shi Kyoto (JP)**

(74) Representative: **Fane, Christopher Robin King
et al
HASELTINE LAKE & CO. Hazlitt House 28
Southampton Buildings Chancery Lane
London, WC2A 1AT (GB)**

Courier Press, Leamington Spa, England.

## Description

This invention relates to a weighing apparatus and, more particularly, to a weighing apparatus which incorporates a load cell of the type having strain gauges affixed thereto.

Load cells of the so-called bending beam-type may be employed as weight sensors for converting the magnitude of an applied load into an electrical signal. A load cell of such type includes a stationary mounting portion, a portion for receiving an applied load, and a pair of parallel, flexible beams which connect the mounting and load-receiving portions to each other. Each beam is reduced in thickness at two separate points, and has a strain gauge affixed thereto at each such point, each load cell therefore having a total of four strain gauges. The four strain gauges are connected in the form of a bridge circuit, with each gauge arranged in one arm of the bridge. A constant voltage is applied across one pair of opposing junctions through a resistor, and an electrical signal corresponding to the magnitude of the load applied to the load cell is obtained from across the other pair of opposing junctions. Thus, when a load is applied to the load-receiving portion of the load cell with a constant voltage applied across one pair of opposing junctions, a potential difference develops across the other pair of opposing junctions owing to a change in the resistance of each strain gauge which measures the strain developed in the beams of the load cell, the strain corresponding to the magnitude of the applied load. Reading the potential difference makes it possible to detect the magnitude of the load.

It is conventional practice to install a load cell of the above type in a weighing apparatus in an exposed condition. As a result, oxides tend to form on the strain gauges owing to oxidation caused by water droplets and sources of moisture. Chlorides also are likely to form on the strain gauges. Since a result of oxidation and chloride formation is a change in the resistance of the strain gauges, correct weight measurement cannot be performed. In addition, external moisture and contaminants in the atmosphere can also degrade and corrode the strain gauges which, with time, may no longer be able to function properly. The problem is particularly acute in the case of weighing machines that rely upon load cells since these machines must be washed with water periodically. The load cells in such machines become wet quite often and quickly deteriorate both physically and electrically.

Thus it has not been possible to use the conventional load cell effectively in locations where the humidity is high or the atmosphere contaminated, or in machines that must be washed with water.

On the other hand, various methods have been proposed for protecting strain gauges, one of which is coating the strain gauges with resin and another of which is disposing a load cell in gas sealed within a closed vessel. However, with regard to the former method, a resin having suitable dampproof- and waterproof-characteristics cannot be found. With regard to the latter method, there is a danger of gas-leakage and a construction suitable for preventing the gas from leaking is complicated.

Accordingly, it is desirable to provide a weighing apparatus which will not be adversely affected by external moisture, water droplets or a corrosive environment, the apparatus including strain gauges which are protected from corrosion or deterioration in their electrical characteristics.

According to the present invention, there is provided weighing apparatus of the type which weighs articles through use of a load cell having strain gauges attached thereto, the said weighing apparatus comprising:

a vessel filled with a liquid having a specific gravity greater than unity, and accommodating the said load cell which is immersed in the said liquid, the said vessel having an opening formed in a portion thereof;

a part co-operating with the said vessel so as to cover the said opening;

a supporting member for supporting a container carrying the articles to be weighed; and

a connecting member for mechanically connecting the said supporting member with a load-receiving portion of the said load cell through the intermediary of the said part.

JP—A—54 121169 discloses a load cell, employing strain gauges, which is disposed in a vessel and immersed in an inert liquid so as to protect the load cell from corrosion. The load to be weighed is applied to the load cell by way of a rod which extends through an opening in the vessel and acts on a beam of the load cell via a steel ball. However, the principal aim of this prior art device is to enable even relatively small loads to be detected accurately and for this purpose an inert liquid having relatively low viscosity is used, so as to lessen the frictional forces acting against the load cell elements. Thus, unlike the present application, JP—A—54121169 is not concerned with the problem of contamination of the inert liquid in the vessel, nor does it suggest that the inert liquid could have a specific gravity greater than unity.

FR—A—2 177 952 discloses a load cell which is disposed in a vessel filled with liquid, the liquid being selected solely for its ability to afford protection against corrosion of the load cell and against explosion. This prior art document suggests that silicone oil would fulfil these requirements. Although some silicone oils are known which have specific gravities greater than unity, the specific gravity of the liquid used is not mentioned. Furthermore, FR—A—2 177 952 is not concerned with the problem of contamination of the liquid in the vessel.

Reference will now be made, by way of example, to the accompanying drawings, in which:

Fig. 1 shows a perspective view of a load cell;
Fig. 2 is a diagram of a bridge circuit;

Fig. 3 shows a sectional view of a first embodiment of weighing apparatus according to the present invention;

Fig. 4 shows a sectional view of a second embodiment of weighing apparatus according to the present invention; and

Fig. 5 shows a sectional view of a third embodiment of weighing apparatus according to the present invention.

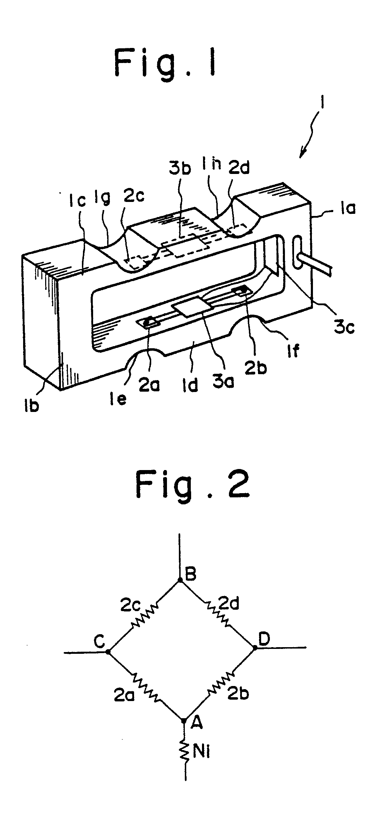

As shown in Fig. 1, a load cell, indicated generally at numeral 1, includes a portion 1a for affixing the cell, a portion 1b for receiving an applied load, and parallel, flexible beams 1c, 1d which interconnect the mounting portion 1a and load-receiving portion 1b. The beams 1c, 1d have portions of reduced thickness 1e, 1f, 1g, 1h, and strain gauges 2a, 2b, 2c, 2d affixed thereto at positions corresponding to the reduced thickness portions 1e, 1f, 1g, 1h, respectively. Substrates 3a, 3b, 3c are attached to the load cell 1 to connect the strain gauges 2a, 2b, 2c, 2d into the form of a bridge, which is depicted in Fig. 2. A constant voltage is applied across opposing junctions A, B of the bridge through a resistor $N_i$. The potential difference developed across the other pair of opposing junctions CD is read and interpreted as indicating the magnitude of the applied load.

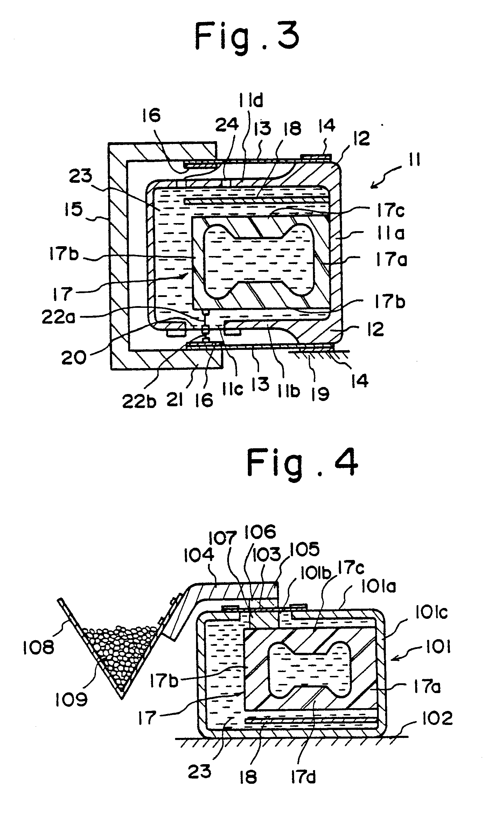

Referring now to Fig. 3, a sealed vessel, indicated at numeral 11, is formed to include protruding portions 12 on its upper and lower surfaces at one end thereof. Leaf springs 13 are attached at one end thereof to respective ones of the protruding portions 12 by means of fixtures 14, the leaf springs 13 projecting forwardly from the protruding portions 12 and extending in parallel. The other ends of the leaf springs 13 are affixed to the arms of a substantially C-shaped supporting frame 15 by means of fixtures 16, whereby the supporting frame 15 is supported by the leaf springs 13. Accommodated within the sealed vessel 11 is a rectangular load cell 17 whose mounting portion 17a is affixed to a side wall 11a of the vessel 11 in such a manner that the load cell is supported in cantilever fashion in parallel with the leaf springs 13. The load cell 17, in addition to the mounting portion 17a, includes a load-receiving portion 17b, as well as parallel upper and lower beams 17c, 17d of the same length for interconnecting the portions 17a, 17b, as described earlier. An amplifier substrate 18 is attached at one end to the side wall 11a of the vessel at a point above the load cell 17 and extends in parallel therewith. The sealed vessel 11 is fixedly secured on the side of its protruding portions 12 to a frame 19 so as to be supported in cantilever fashion on the frame 19. The sealed vessel 11 further includes a lower wall 11b having an opening 11c of a prescribed size immediately below the load-receiving portion 17b of the load cell 17. A diaphragm 20 is affixed to the lower wall 11b of the sealed vessel 11 to close the opening 11c. A weighing hopper, not shown, is attached to the supporting frame 15 at a weighing point 21 which is in line with those ends of the parallel leaf springs 13 which are affixed to the supporting frame 15. The weighing portion 21 of the supporting frame is mechanically connected to the lower surface of the weight-receiving portion 17b of the load 17 at the free end thereof by means of wires 22a, 22b, wire 22a providing the connection between the diaphragm and weight-receiving portion, and wire 22b providing the connection between the diaphragm and the supporting frame. A liquid 23 comprising oil having a specific gravity greater than unity is sealed within the vessel 11. A plurality of holes 24, which ordinarily are closed by suitable means, are formed in the upper wall 11d of the sealed vessel 11 at a prescribed portion thereof for the purpose of changing the oil when required. Strain gauges, not shown, are affixed to the upper and lower beams 17c, 17d of the load cell 17 at prescribed locations for delivering the electric signals corresponding to the load when it is applied to the weighing portion 21 of the load cell.

In operation, the weighing portion 21 of the supporting frame 15 is subjected to a load, namely to the weight of articles disposed in the weighing hopper, not shown. The load causes vertical displacement of the supporting frame 15, which displacement is transmitted to the load-receiving portion 17b of the load cell 17 via the wires 22a, 22b and diaphragm 20. The load-receiving portion 17b of the load cell is thus displaced downwardly by an amount proportional to the load, thereby enabling the load to be detected.

According to the foregoing construction, any water or foreign matter that might happen to penetrate the sealed vessel 11 will float on the surface of the liquid 23 owing to its specific gravity, which is greater than unity, and therefore will not contact the load cell 17. Any water or foreign matter found floating on the oil can be removed through the holes 24 by uncovering the holes as required.

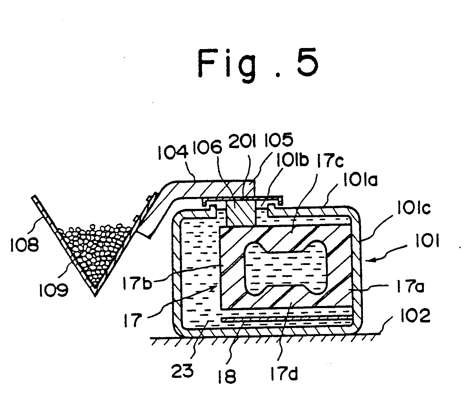

A second embodiment of the present invention is shown in Fig. 4. In this arrangement a sealed vessel, indicated at numeral 101, has an opening 101b of a prescribed size formed in the upper wall 101a thereof and is fixedly secured to a frame 102. A load cell 17 has its mounting portion 17a affixed to a side wall 101c of the vessel 101 so that the cell is supported in cantilever fashion within the vessel. Also attached to the side wall 101c of the vessel 101 is an amplifier substrate 18, which in this case underlies the load cell 17. A diaphragm 103 is affixed to the upper wall 101a of the vessel 101 to close the opening 101b. A weighing portion 105 of a supporting frame 104 is mechanically connected to the upper beam 17c of the load cell 17 at the free end thereof by means of pressing members 106, 107 which sandwich the diaphragm 103 therebetween. As in the first embodiment, the sealed vessel 101 contains a liquid comprising oil 23 of a specific gravity greater than unity. Thus, as described above, any water or foreign matter which has managed to penetrate the sealed vessel 101 will float on the surface of the liquid 23 and collect at the upper portion of the vessel, and therefore will not affect the load cell 17.

In Fig. 4, numeral 108 denotes a weighing hopper which is fixedly secured to a curved arm formed on the supporting frame 104. Numeral 109 denotes the articles which are to be weighed. As in the first embodiment, the supporting frame 104 is displaced owing to the load, or weight, of the articles loaded in the hopper 108. The displacement of the supporting frame 104 is transmitted to the free end of the load cell 17 via the pressing members 106, 107 and diaphragm 103, and is detected by strain gauges, not shown, affixed to the load cell. The signals from the strain gauges provide an electrical indication of the weight of the articles 109.

In Fig. 5, a third embodiment using a cover-portion instead of the diaphragm is disclosed, in which parts which are similar to those in the embodiment of Fig. 4 are denoted by the same symbols. Numeral 201 denotes the cover-portion, through which the weighing portion 105 of the supporting frame 104 is mechanically connected to the upper beam 17c of the load cell 17.

Thus, in accordance with the present invention as described and illustrated hereinabove, a liquid of a specific gravity greater than unity is sealed within a vessel of prescribed dimensions, a weight sensor such as a load cell is accommodated within the sealed vessel and immersed in the liquid, and a frame for supporting a weighing hopper or the like is mechanically connected to the sensor through a diaphragm or cover-portion which covers an opening formed in a portion of the sealed vessel. Such an arrangement inhibits water and foreign matter from invading the interior of the vessel even if the vessel is washed. Moreover, in the event that any water or foreign matter should manage to penetrate the vessel, the specific gravity of the sealed liquid assures that the water or other matter will float and collect at the top of the vessel and will not affect the sensor. Also, if the liquid in which the sensor is immersed is oil or a similar substance, elements such as strain gauges or the like will not develop deposits of chlorides and will not be oxidized by water droplets, moisture or harmful gases that may exist in the vicinity. This protects the strain gauges against deterioration and corrosion and attendant changes in electrical characteristics, thereby promoting a high degree of measuring accuracy.

As many apparently widely different embodiments of the present invention may be made without departing from the spirit and scope thereof, it is to be understood that the invention is not limited to the specific embodiment thereof except as defined in the appended claims.

## Claims

1. Weighing apparatus of the type which weighs articles through use of a load cell (17) having strain gauges attached thereto, the said weighing apparatus comprising:
   a vessel (11, 101) filled with a liquid (23) having a specific gravity greater than unity, and accommodating the said load cell (17) which is immersed in the said liquid, the said vessel having an opening (11c, 101b) formed in a portion (11b, 101a) thereof;
   a part (20, 103, 201) co-operating with the said vessel (11, 101) so as to cover the said opening (11c, 101b);
   a supporting member (15, 104) for supporting a container (108) carrying the articles to be weighed; and
   a connecting member (22, 106, 107) for mechanically connecting the said supporting member (15, 104) with a load-receiving portion of the said load cell (17) through the intermediary of the said part (20, 103, 201).

2. Apparatus as claimed in claim 1, wherein the said part (20, 103, 201) is a diaphragm.

3. Apparatus as claimed in claim 2, further comprising a pair of leaf springs (13) fixedly secured at one end thereof to respective protrusions (12) formed on upper and lower surfaces of the said vessel (11), the other ends of the said leaf springs (13) being affixed to respective ends of the said supporting member (15).

4. Apparatus as claimed in claim 2 or 3, in which the said diaphragm (20) is affixed to a bottom portion of the said vessel (11), and the said connecting member (22) comprises first and second wires (22b, 22a), the supporting member (15) being mechanically connected with the said diaphragm (20) by the said first wire (22b), and the said diaphragm (20) being mechanically connected with the load-receiving portion of the load cell (17) by the said second wire (22a).

5. Apparatus as claimed in claim 1, in which the said part (20, 103, 201) is affixed to an upper portion of the said vessel (11, 101).

## Patentansprüche

1. Wägevorrichtung des Typs, der Gegenstände mittels einer Kraftmeßdose (17) wiegt, an der Spannungsmesser befestigt sind, mit den folgenden Teilen:
   einem Gefäß (11, 101), das mit einer Flüssigkeit (23) gefüllt ist, die ein spezifisches Gewicht hat, welches größer als eins ist, und das die Kraftmeßdose (17) aufnimmt, welche in die Flüssigkeit eingetaucht ist, wobei das Gefäß eine Öffnung (11c, 101b) aufweist, die in einem Teil (11b, 101a) des Gefäßes ausgebildet ist;
   einem Teil (20, 103, 201), der mit dem Gefäß (11, 101) so zusammenwirkt, daß es die Öffnung (11c, 101b) verschließt;
   einem Halteteil (15, 104) zum Halten eines Behälters (108), der die zu wiegenden Gegenstände trägt; und

einem Verbindungsteil (22, 106, 107), der den Halteteil (15, 104) durch Zwischenschaltung des Teils (20, 103, 201) mechanisch mit einem kraftaufnehmenden Teil der Kraftmeßdose (17) verbindet.

2. Vorrichtung nach Anspruch 1, bei der der Teil (20, 103, 201) eine Membran ist.

3. Vorrichtung nach Anspruch 2, die im weiteren ein Paar Blattfedern (13) aufweist, welche mit ihrem einen Ende fest an jeweiligen Vorsprüngen (12) angebracht sind, die an der oberen und an der unteren Fläche des Gefäßes (11) ausgebildet sind, wobei die anderen Enden der Blattfedern (13) an den jeweiligen Enden des Halteteils (15) befestigt sind.

4. Vorrichtung nach Anspruch 2 oder 3, bei der die Membran (20) an einem Bodenteil des Gefäßes (11) befestigt ist und der Verbindungsteil (22) einen ersten und einen zweiten Draht (22b, 22a) aufweist, wobei der Halteteil (15) durch den ersten Draht (22b) mechanisch mit der Membran (20) verbunden ist und die Membran (20) durch den zweiten Draht (22a) mechanisch mit dem kraftaufnemhenden Teil der Kraftmessdose (17) verbunden ist.

5. Vorrichtung nach Anspruch 1, bei der der Teil (20, 103, 201) an einem oberen Bereich des Gefäßes (11, 101) befestigt ist.

**Revendications**

1. Appareil de pesage du type pesant des articles par utilisation d'une cellule dynamométrique (17) à laquelle sont fixées des jauges de contrainte, l'appareil de pesage comprenant:

une cuve (11, 101) remplie d'un liquide (23) ayant une masse spécifique supérieure à l'unité et renfermant la cellule dynamométrique (17) qui est immergée dans le liquide, la cuve ayant une ouverture (11c, 101b) formée dans une partie (11b, 101a) de la cuve;

une pièce (20, 103, 201) co-opérant avec la cuve (11, 101) de façon à couvrir l'ouverture (11c, 101b);

un organe de support (15, 104) servant de support au récipient (108) renfermant les articles à peser; et

un organe de raccordement (22, 106, 107) pour le raccordement mécanique de l'organe de support (15, 104) avec une partie réceptrice de charge de la cellule dynamométrique (17), par l'intermédiaire de ladite pièce (20, 103, 201).

2. Appareil selon la revendication 1, caractérisé en ce que ladite pièce (20, 103, 201) est un diaphragme.

3. Appareil selon la revendication 2, comprenant en outre une paire de ressorts à lame (13) montés fixes par l'une de leurs extrémités sur des saillies respectives (12) formées sur les surfaces supérieures et inférieures de la cuve (11), les autres extrémités des ressorts à lame (13) étant fixées aux extrémités respectives de l'organe de support (15).

4. Appareil selon la revendication 2 ou 3, caractérisé en ce que le diaphragme (20) est fixé à une partie de fond de la cuve (11) et que l'organe de raccordement (22) comprend des premier et second fils (22b, 22a), l'organe de support (15) étant raccordé mécaniquement au diaphragme (20) par le premier fil (22b) et le diaphragme (20) étant raccordé mécaniquement à la partie réceptrice de charge de la cellule dynamométrique (17) par l'intermédiaire du second fil (22a).

5. Appareil selon la revendication 1, caractérisé en ce que ladite pièce (20, 103, 201) est fixée à une partie supérieure de la cuve (11, 101).

# Fig. 1

# Fig. 2

# Fig.3

# Fig.4

# Fig . 5